# FASCICULE DE BREVET EUROPEEN

(11) **EP 0 896 490 B1**
(45) Date de publication et mention de la délivrance du brevet: **29.08.2001**
(21) Numéro de dépôt: 98401791.3
(22) Date de dépôt: 16.07.1998
(51) Int. Cl.: H04Q 7/32, H04M 1/00

(54) **Procédé d'adaptation du fonctionnement d'un module d'identification d'abonné à une ou des interface(s) d'un terminal mobile de radio-communication, module d'identification d'abonné et terminal mobile correspondants**
Verfahren zur Anpassung des Betriebs eines Teilnehmeridentifikationsmoduls an eine Mobiltelefon-Schnittstelle, Teilnehmeridentifikationsmodul und Mobiltelefon dafür
Method for adapting the operation of a subscriber identification module to a mobile phone's interface(s), and related subscriber identification module and mobile phone

(30) Priorité: 04.08.1997 FR 9709947
(43) Date de publication de la demande: 10.02.1999
(73) Titulaire: ALCATEL, 75008 Paris (FR)
(72) Inventeur: Choquet, Christophe, 75015 Paris (FR); Hubbe, Pascal, 75014 Paris (FR); Lelong-Gilbert, Anne-Gaelle, 78220 Viroflay (FR)
(74) Mandataire: El Manouni, Josiane

(56) Documents cités:
- US-A- 5 633 484
- Digital cellular telecommunications systemSpecification of the SIM Application Toolkit for the Subscriber Identity Module-Mobile Equipment (SIM-ME) interface. (GSM 11.14 version 5.4.0)-July 1997 XP002064640

## Description

Le domaine de l'invention est celui des systèmes de radio-communications et notamment, mais non exclusivement, des systèmes tels que le GSM" (pour "Global System for Mobile communications" en anglais) et le "DCS" 1800 (pour "Digital Cellular System" en anglais).

D'une façon générale, dans un tel système, l'usager dispose d'une station mobile constituée d'un terminal mobile qui coopère avec un module d'identification d'abonné (ou carte "SIM", pour "Subscriber Identity Module" en anglais, dans le standard GSM). Généralement, la carte SIM est une carte à puce destinée à être insérée dans un terminal mobile pour en permettre l'utilisation.

Plus précisément, l'invention concerne un procédé permettant d'adapter le fonctionnement d'un module d'identification d'abonné à une ou une pluralité d'interface(s) du terminal mobile avec lequel il coopère.

De façon classique, les terminaux mobiles offrent certaines facilités permettant notamment d'accéder notamment à des services. Ces facilités offertes sont par exemple :
- la possibilité de stockage de données de type répertoires téléphoniques, permettant de faciliter l'accès aussi bien à des services dits de base, qu'à des services dits à valeur ajoutée opérateur (tels que notamment des services interactifs) ;
- la possibilité d'effectuer des opérations sur des services dits supplémentaires (tels que par exemple le renvoi d'appels, l'interdiction d'appels sortants,...) ;
- dans le cas de réseaux de radiomobiles offrant un service de téléphonie, la fourniture d'un service de transmission de messages alphanumériques courts, ainsi que la possibilité de stockage de messages alphanumériques courts à émettre, ou à recevoir, par les terminaux mobiles.

A l'origine, les données liées à de telles facilités étaient stockées dans le terminal mobile même. Par la suite, pour obtenir plus de souplesse, il a été proposé d'effectuer ce stockage dans le module d'identification d'abonné.

Ainsi, la recommandation GSM 11.11 préconise que les données liées aux facilités soient, comme les données liées à l'identification d'abonné, stockées dans des zones de mémoire prédéfinies de la carte SIM, de manière à assurer une compatibilité de cette carte avec les divers types de terminaux mobiles GSM susceptibles de la recevoir.

Grâce à la norme de télécommunication européenne (ou "ETS" pour "European Télécommunication Standard" en anglais), l'interface entre le module d'identification d'abonné et le terminal mobile assure l'interopérabilité entre ces deux éléments, indépendamment des constructeurs respectifs et des opérateurs. Ainsi, il est possible de bénéficier des facilités à partir de n'importe quel terminal mobile susceptible de coopérer avec un tel module d'identification d'abonné.

Cependant, un inconvénient majeur subsiste. En effet, lorsque le module d'identification d'abonné envoie une commande destinée à une ou une pluralité d'interface(s), il ne s'assure pas préalablement que le type d'interface(s) utilisée(s) peut reconnaître la commande envoyée, notamment en ce qui concerne le type d'affichage graphique. Par conséquent, il se peut que le module d'identification d'abonné envoie au terminal avec lequel il coopère des commandes qui ne peuvent être prises en compte par ce dernier.

L'invention a notamment pour objectif de pallier cet inconvénient majeur de l'état de la technique.

Plus précisément, l'un des objectifs de la présente invention est de fournir un procédé d'adaptation du fonctionnement d'un module d'identification d'abonné à une ou une pluralité d'interface(s) d'un terminal mobile de radio-communication. L'invention a également comme objectif de fournir un module d'identification d'abonné et un terminal mobile permettant la mise en oeuvre d'un tel procédé.

Un objectif complémentaire de l'invention est de fournir un tel procédé, un tel module d'identification d'abonné et un tel terminal mobile permettant d'optimiser l'utilisation des ressources disponibles sur le terminal mobile employé.

Un autre objectif complémentaire de l'invention est de fournir un tel procédé, un tel module d'identification d'abonné et un tel terminal mobile permettant de s'affranchir des différents types de terminaux mobiles utilisés.

Ces différents objectifs, ainsi que d'autres qui apparaîtront par la suite, sont atteints selon l'invention à l'aide d'un procédé d'adaptation du fonctionnement d'un module d'identification d'abonné en fonction d'au moins une information, dite information d'interface(s), concernant la ou au moins une des interface(s) d'un terminal mobile de radio-communication avec lequel coopère ledit module d'identification d'abonné, comprenant les étapes suivantes :
- émission par ledit module d'identification d'abonné, à destination dudit terminal, d'une commande d'acquisition d'information(s) d'interface(s) ;
- réception et exécution par ledit terminal de ladite commande d'acquisition d'information(s) d'interface(s), de façon à générer une réponse contenant au moins une information d'interface(s) ;
- émission par ledit terminal, à destination dudit module d'identification d'abonné, de ladite réponse ;
- réception par ledit module d'identification d'abonné de ladite réponse et adaptation de son fonctionnement en fonction du contenu de ladite réponse.

Le principe général de l'invention repose donc sur l'ajout d'une commande d'acquisition d'information(s) d'interface(s) permettant à un module d'identification d'abonné d'aller récupérer la ou les information(s) concernant une ou une pluralité d'interface(s) utilisée(s) par le terminal mobile avec lequel il coopère. Les interfaces définissent notamment les caractéristiques ergonomiques du terminal.

Cela permet par la suite au module d'identification d'abonné d'envoyer des commandes appropriées au type d'interface(s) utilisée(s) par le terminal mobile, et donc d'utiliser au mieux les capacités du terminal mobile employé.

La commande d'acquisition d'information(s) d'interface(s), qui est stockée dans le module d'identification d'abonné est indépendante du type de terminal avec lequel le module d'identification d'abonné est destiné à coopérer.

Il est clair que le module d'identification d'abonné peut envoyer différentes commandes successives d'acquisition d'information(s) d'interface(s) à différents moments, de façon à obtenir notamment différentes informations d'interface(s).

Selon un mode de réalisation préférentiel de l'invention, ladite au moins une information d'interface(s) appartient au groupe comprenant :
- le type d'affichage dudit terminal ;
- la taille de l'écran dudit terminal ;
- la taille en texte de l'écran dudit terminal ;
- le type du clavier dudit terminal ;
- la plage de fréquences sonores que ledit terminal est capable de générer ;
- la plage de fréquences sonores que ledit terminal est capable de recevoir.

Cette liste est bien sûr non limitative.

Il est à noter que l'invention n'impose aucune contrainte sur la forme et la nature de la ou des informations d'interface(s). De même, l'invention n'impose aucune contrainte sur le nombre et la nature de la ou des interface(s) utilisée(s) par le terminal mobile.

Il est clair qu'une réponse peut contenir différentes informations d'interface(s).

De façon avantageuse, ladite commande d'acquisition d'information(s) d'interface(s) est une commande supplémentaire du jeu de commandes du protocole de dialogue entre ledit terminal et ledit module d'identification d'abonné.

De façon avantageuse, lors d'une étape préalable, ledit terminal indique audit module d'identification d'abonné s'il est capable d'exécuter ladite commande d'acquisition d'informations d'interface(s).

Ainsi, cela évite au module d'identification d'abonné d'envoyer inutilement une commande qui ne peut être reconnue par la ou les différente(s) interface(s) utilisée(s) par le terminal mobile. L'étape préalable correspond par exemple à une étape d'initialisation ou à une étape effectuée à tout autre moment, notamment quand le module d'identification d'abonné a besoin d'information(s) d'interface(s). La connaissance de la capacité du terminal à exécuter la commande d'acquisition d'informations d'interface(s) est intéressante. Cela est vrai notamment avant que le module d'identification d'abonné n'envoie à destination du terminal une commande destinée à mettre en oeuvre la ou les interfaces dont on a recueilli la ou les informations.

L'invention concerne également un module d'identification d'abonné du type destiné à coopérer avec un terminal mobile de radio-communication. Ce module d'identification d'abonné comprend :
- des moyens d'émission vers ledit terminal d'une commande d'acquisition d'au moins une information, dite information d'interface(s), concernant la ou au moins une des interface(s) dudit terminal ;
- des moyens de réception d'une réponse que lui envoie ledit terminal suite à l'émission de ladite commande d'acquisition, ladite réponse contenant au moins une information d'interface(s) ;
- des moyens d'adaptation de son fonctionnement en fonction du contenu de ladite réponse.

Ainsi, le module d'identification d'abonné est adapté pour pouvoir exécuter le procédé précité d'adaptation du fonctionnement d'un module d'identification d'abonné en fonction d'au moins une information, dite information d'interface(s), concernant la ou au moins une des interface(s) d'un terminal mobile de radio-communication avec lequel coopère ledit module d'identification d'abonné.

En outre, les moyens supplémentaires du module d'identification d'abonné sont simples à mettre en oeuvre, peu coûteux et ne nécessitent aucune restructuration profonde par rapport au module d'identification d'abonné connu.

De façon avantageuse, ledit module d'identification d'abonné comprend des moyens de stockage temporaire de ladite au moins une information d'interface(s).

Ainsi, cela permet de sauvegarder la ou les informations concernant le(s) interface(s) que le terminal mobile utilise, de manière à pouvoir venir la ou les récupérer au moment opportun, notamment avant chaque envoi d'une commande fonction du type d'interface à mettre en oeuvre.

Il est clair que le module d'identification d'abonné de l'invention peut disposer d'une bibliothèque, qui regroupe tous les types d'interfaces possibles. De cette manière, suite à un marquage quelconque du type d'interface(s) que le terminal mobile utilise après la réception de la ou des informations correspondantes, le module d'identification d'abonné connaît alors la ou les informations recherchées.

L'invention concerne également le terminal mobile de radio-communication du type destiné à coopérer avec un module d'identification d'abonné. Ce terminal mobile comprend :
- des moyens de réception et d'exécution d'une commande d'acquisition d'au moins une information, dite information d'interface(s), concernant la ou au moins une des interface(s) dudit terminal, ladite commande lui étant envoyée par ledit module d'identification d'abonné, ladite exécution permettant de générer une réponse contenant au moins une information d'interface(s) ;
- des moyens d'émission de ladite réponse vers ledit module d'identification d'abonné.

Ainsi, le terminal mobile de l'invention est capable de recevoir, analyser, reconnaître, et exécuter une commande d'acquisition d'information(s) d'interface(s) puis d'envoyer une réponse comprenant la ou les information(s) d'interface(s) demandée(s).

Il est clair que l'invention n'impose aucune contrainte quant à la durée nécessaire pour réaliser ces différentes opérations.

De même, l'invention n'impose aucune contrainte quant à un éventuel arrêt des tâches que le terminal est en train d'exécuter au moment de la réception de la commande d'acquisition d'information(s) d'interface(s).

D'autres caractéristiques et avantages de l'invention apparaîtront à la lecture de la description suivante d'un mode de réalisation préférentiel de l'invention, donné à titre de simple exemple indicatif et non limitatif, et des dessins annexés, dans lesquels :
- la figure 1 présente un schéma simplifié d'un mode de réalisation particulier d'un module d'identification d'abonné selon l'invention ;
- la figure 2 présente un schéma simplifié d'un mode de réalisation particulier d'un terminal mobile selon l'invention, destiné à coopérer avec le module d'identification d'abonné de la figure 1;
- la figure 3 est un organigramme simplifié d'un mode de réalisation particulier du procédé selon l'invention.

Dans la suite de la description, on se place dans le cas particulier d'un système de radiocommunication selon le standard GSM. Il est clair que l'homme du métier saura étendre les principes évoqués ci-dessous à d'autres types de systèmes de radiocommunication.

L'invention concerne donc un procédé permettant d'adapter le fonctionnement d'un SIM en fonction de la ou des interface(s) d'un terminal mobile avec lequel coopère ce SIM. L'invention concerne également le SIM et le terminal permettant la mise en oeuvre de ce procédé.

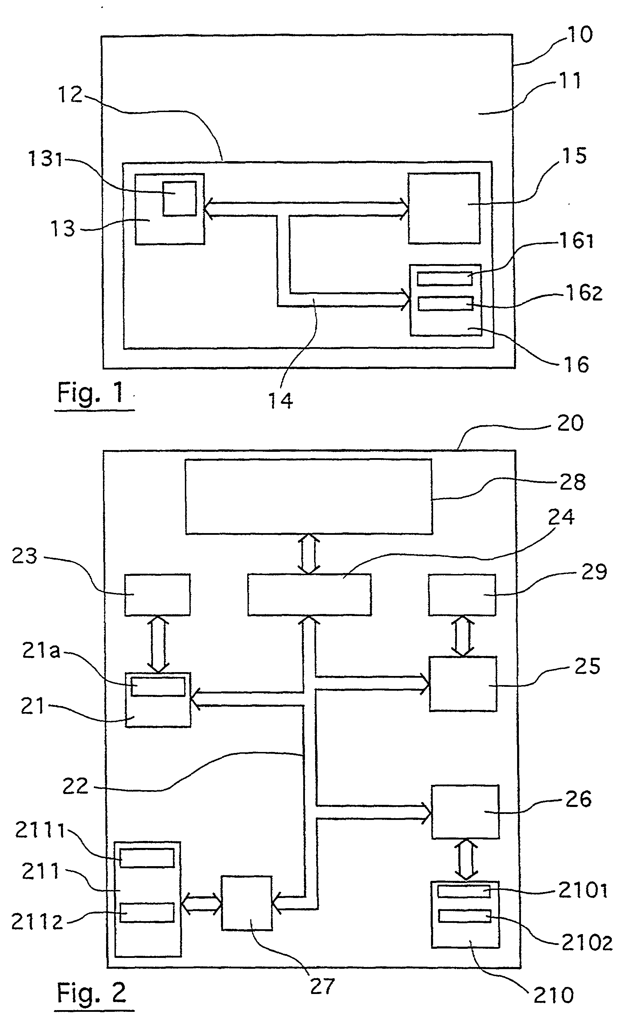

On présente maintenant, en relation avec le schéma simplifié de la figure 1, un SIM (ou plus généralement un module d'identification d'abonné) selon l'invention.

Ce SIM 10 est constitué notamment d'un support 11, qui porte une puce semiconductrice 12. Celle-ci comprend notamment des moyens 13 de traitement et de gestion des données (par exemple un microprocesseur), organe central de décision qui pilote via un bus bi-directif 14 les autres moyens de la puce 12 (partiellement représentés 15, 16).

De plus, et de façon spécifique à la présente invention, les moyens 13 de traitement et de gestion des données comprennent notamment des moyens 131 d'adaptation du fonctionnement du SIM. Comme présentés en détail par la suite, lorsque le SIM coopère avec un terminal, ces moyens 131 d'adaptation du fonctionnement du SIM agissent en fonction d'une réponse issue du terminal mobile à une commande d'acquisition d'information(s) concernant le type d'interface(s) utilisée(s) par ce terminal.

Sur la puce 12, des moyens de stockage de données 15 permettent de sauvegarder au moins temporairement notamment la ou les information(s) contenue(s) dans la réponse précitée, recueillie par des moyens 16 de coopération. Ces moyens 16 de coopération comprennent notamment des moyens d'émission 161 vers le terminal d'une commande d'acquisition d'information(s) d'interface(s) de ce même terminal, des moyens de réception 162 d'une réponse issue de ce terminal qui contient le(s) information(s) demandée(s). Ces moyens 16 de coopération sont destinés à coopérer avec des moyens de coopération associés (tel qu'un lecteur 211 figure 2) prévus sur le terminal.

Dans l'exemple présenté sur la figure 2, le terminal 20 de l'invention comprend des moyens 21 de traitement et de gestion des données (par exemple un microprocesseur), organe central de décision qui pilote via un bus bi-directif 22 les autres moyens du terminal.

Selon l'invention, ces moyens 21 de traitement et de gestion des données comprennent notamment des moyens d'exécution 21a d'une commande d'acquisition d'information(s) de(s) différent(s) type(s) d'interface(s) utilisée(s) par le terminal. Ces moyens 2 la permettent notamment de générer une réponse, éventuellement après avoir recueilli des informations auprès des différents moyens d'interface(s). Le terminal comprend en outre des moyens de stockage de données 23, qui sont reliés aux moyens précités 21.

Les moyens 21 de traitement et de gestion des données commandent notamment différents moyens d'interface 24 à 27 respectivement avec l'écran 28, le clavier 29 et le microphone 210₁ et le haut-parleur 210₂ et le lecteur 211 de SIM. Le lecteur 211 de SIM comprend notamment des moyens de réception 211₁ d'une commande d'acquisition d'information(s) concernant les diverses interfaces du terminal et des moyens d'émission 211₂ de la réponse associée.

Selon les recommandations GSM 11.11 et 11.14, on utilise un jeu de commandes pour l'application du SIM (ou "SIM Application Toolkit" en anglais). Ce dernier regroupe un ensemble d'applications et de procédures associées pouvant être utilisé durant une session GSM. Ce "SIM Application Toolkit" présente notamment la façon dont un SIM peut interagir et opérer avec un terminal quelconque et incorpore à cet effet les mécanismes spécifiques requis par une application.

En particulier, dans le cadre du "SIM Application Toolkit", il est prévu que le SIM stocke dans un fichier appelé "SIM Service Table" une information qui indique qu'il sait envoyer au terminal des commandes, appartenant au groupe appelé "Proactive SIM", que le SIM peut faire exécuter par le terminal (si ce dernier est adapté en ce sens). Après une lecture du SIM Service Table, le terminal signale au SIM par une commande appelée "Terminal Profile" la liste des commandes Proactive SIM que le terminal sait exécuter. Parmi les commandes du Proactive SIM, on compte notamment des commandes d'affichage de texte à l'écran (ou "DISPLAY TEXT"en anglais), de sélection d'un article parmi une liste d'articles (ou "SELECT ITEM"en anglais).

Selon l'invention, c'est précisément dans la liste des commandes "Proactive SIM" que vient se rajouter la commande d'acquisition d'information(s) d'interface(s) du terminal. En d'autres termes, la commande de l'invention constitue une commande supplémentaire du jeu de commandes du protocole de dialogue entre le terminal et le SIM.

On rappelle que de façon classique, après qu'il a été mis en coopération avec le terminal, le SIM cherche à savoir ce que le terminal est capable d'effectuer, notamment en terme de commandes. Pour cela, lors d'une étape préalable, par exemple une étape d'initialisation ou une étape effectuée à tout autre moment, un message appelé "Terminal Profile" d'une procédure appelée "Profile Download" est envoyé du terminal vers le SIM. Dans ce message, le terminal indique au SIM la liste des commandes qu'il est capable de reconnaître et d'exécuter. Par conséquent, selon les cas, la commande d'acquisition d'information(s) d'interface(s) de la présente invention fait ou ne fait pas partie de cette liste.

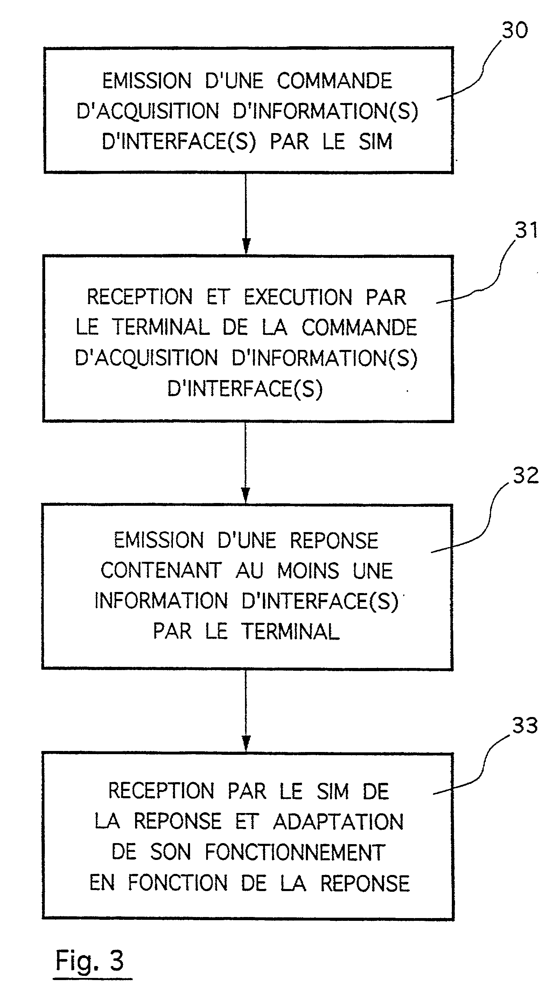

En relation avec l'organigramme de la figure 3, on présente maintenant le procédé selon l'invention d'adaptation du fonctionnement d'un SIM en fonction d'information(s) d'interface(s) d'un terminal avec lequel coopère ce SIM.

Ce procédé comprend les étapes successives suivantes de la figure 3 :
- le SIM émet (30) une commande d'acquisition d'information(s) d'interface(s) vers le terminal ;
- le terminal reçoit et exécute (31) la commande d'acquisition d'information(s) d'interface(s), de façon à générer une réponse contenant au moins une information d'interface(s) ;
- le terminal émet (32) la réponse contenant au moins une information d'interface(s) ;
- le SIM reçoit (33) la réponse, l'analyse et adapte son fonctionnement en fonction du contenu de cette réponse.

Le contenu de la réponse comprend notamment une ou plusieurs des informations d'interface(s) suivantes : le type d'affichage (graphique et/ou texte par exemple), la taille de l'écran, la taille en texte de l'écran, le type du clavier du terminal, la plage de fréquences sonores que le terminal est capable de générer ou de recevoir,....

Ainsi, le SIM peut choisir notamment la commande à envoyer parmi une pluralité, en fonction du type d'interface(s) du terminal auquel elle est destinée. Par exemple, il peut n'utiliser que la ou les commande(s) d'affichage graphique et non pas la ou les commande(s) d'affichage texte si le terminal utilise une interface d'affichage graphique.

Il est clair que l'adaptation du fonctionnement du SIM peut aussi se faire en fonction de n'importe laquelle des autres informations d'interface(s) que peut contenir la réponse à la commande d'acquisition d'interface(s) utilisée(s) par le terminal.

On notera que, bien que la description qui précède corresponde plus particulièrement au cas où la commande d'acquisition d'information(s) d'interface(s) est stockée dans le fichier "Proactive SIM" du SIM, il serait aussi possible de stocker cette commande dans d'autres fichiers du SIM. Selon une autre variante, lors de l'initialisation de l'interaction entre le terminal et le SIM, le terminal envoie systématiquement et de lui-même (sans commande du SIM) au SIM un message contenant au moins une information d'interface(s).

## Revendications

1. Procédé d'adaptation du fonctionnement d'un module d'identification d'abonné (10) en fonction d'au moins une information d'interface(s) concernant la ou au moins une des interface(s) (28 à 211) d'un terminal mobile (20) de radio-communication avec lequel coopère ledit module d'identification d'abonné (10),
**caractérisé en ce qu**'il comprend les étapes suivantes:
- émission (30) par ledit module d'identification d'abonné (10), à destination dudit terminal (20), d'une commande d'acquisition d'information(s) d'interface(s) ;
- réception et exécution (31) par ledit terminal (20) de ladite commande d'acquisition d'information(s) d'interface(s), de façon à générer une réponse contenant au moins une information d'interface(s) ;
- émission (32) par ledit terminal (20), à destination dudit module d'identification d'abonné (10), de ladite réponse ;
- réception (33) par ledit module d'identification d'abonné (10) de ladite réponse et adaptation de son fonctionnement en fonction du contenu de ladite réponse.

2. Procédé selon la revendication 1, **caractérisé en ce que** ladite au moins une information d'interface(s) appartient au groupe comprenant :
- le type d'affichage dudit terminal (20) ;
- la taille de l'écran (28) dudit terminal (20) ;
- la taille en texte de l'écran (28) dudit terminal (20) ;
- le type du clavier (29) dudit terminal (20) ;
- la plage de fréquences sonores que ledit terminal (20) est capable de générer ;
- la plage de fréquences sonores que ledit terminal (20) est capable de recevoir.

3. Procédé selon l'une quelconque des revendications 1 et 2, **caractérisé en ce que** ladite commande d'acquisition d'information(s) d'interface(s) est une commande supplémentaire du jeu de commandes du protocole de dialogue entre ledit terminal (20) et ledit module d'identification d'abonné (10).

4. Procédé selon l'une quelconque des revendications 1 à 3, **caractérisé en ce que**, lors d'une étape préalable, ledit terminal (20) indique audit module d'identification . d'abonné (10) s'il est capable d'exécuter ladite commande d'acquisition d'informations d'interface(s).

5. Module d'identification d'abonné (10) du type destiné à coopérer avec un terminal mobile (20) de radio-communication, **caractérisé en ce qu**'il comprend :
- des moyens (161) d'émission vers ledit terminal (20) d'une commande d'acquisition d'au moins une information d'interface(s), concernant la ou au moins une des interface(s) (28 à 211) dudit terminal (20) ;
- des moyens (162) de réception d'une réponse que lui envoie ledit terminal (20) suite à l'émission (30) de ladite commande d'acquisition, ladite réponse contenant au moins une information d'interface(s) ;
- des moyens (131) d'adaptation de son fonctionnement en fonction du contenu de ladite réponse.

6. Module d'identification d'abonné (10) selon la revendication 5, **caractérisé en ce qu**'il comprend des moyens (15) de stockage temporaire de ladite au moins une information d'interface(s).

7. Terminal mobile (20) de radio-communication du type destiné à coopérer avec un module d'identification d'abonné (10), **caractérisé en ce qu**'il comprend :
- des moyens (211₁) de réception et (21a) d'exécution d'une commande d'acquisition d'au moins une information d'interface(s), concernant la ou au moins une des interface(s) (28 à 211) dudit terminal (20), ladite commande lui étant envoyée par ledit module d'identification d'abonné (10), ladite exécution permettant de générer une réponse contenant au moins une information d'interface(s) ;
- des moyens (211₂) d'émission de ladite réponse vers ledit module d'identification d'abonné (10).

## Patentansprüche

1. Verfahren zur Anpassung des Betriebs eines Teilnehmeridentifikationsmoduls (10) in Abhängigkeit von wenigstens einer Schnittstelleninformation, die die oder wenigstens eine der Schnittstelle(n) (28 bis 211) wenigstens eines Mobiltelefons (20) mit welchem das Teilnehmeridentifikationsmodul (10) zusammenarbeitet, **dadurch gekennzeichnet**, dass es die folgenden Schritte umfasst:
- Senden (30) eines Erfassungsbefehls für Schnittstelleninformation(en) durch das Teilnehmeridentifikationsmodul (10) mit Ziel Endgerät (20);
- Empfang und Ausführung (31) des Erfassungsbefehls für Schnittselleninformation(en) durch das Endgerät (20), so dass eine Antwort erzeugt wird, die wenigstens eine Schnittstelleninformation enthält;
- Senden (32) der Antwort durch das Endgerät (20) mit Ziel Teilnehmeridentifikfationsmodul (10);
- Empfang (33) der Antwort durch das Teilnehmeridentifikationsmodul (10) und Anpassung seines Betriebs in Abhängigkeit vom Inhalt der Antwort.

2. Verfahren nach Anspruch 1, **dadurch gekennzeichnet**, dass die oder wenigstens eine Schnittstelleninformation zu der Gruppe gehört, die umfasst:
- die Art der Anzeige des Endgeräts (20);
- die Größe des Bildschirms (28) des Endgeräts (20) ;
- die Größe im Text des Bildschirms (28) des Endgeräts (20);
- die Art der Tastatur (29) des Endgeräts (20) ;
- der Tonfrequenzbereich, den das Endgerät (20) erzeugen kann;
- der Tonfrequenzbereich, den das Endgerät (20) empfangen kann.

3. Verfahren nach einem der Ansprüche 1 und 2, **dadurch gekennzeichnet**, dass der Erfassungsbefehl für Schnittstelleninformation(en) ein zusätzlicher Befehl einer Gruppe von Befehlen des Protokolls für den Dialog zwischen dem Endgerät (20) und dem Teilnehmeridentifikationsmodul (10) .

4. Verfahren nach einem der Ansprüche 1 bis 3, **dadurch gekennzeichnet**, dass das Endgerät (20) bei einem vorherigen Schritt dem Teilnehmeridentifikationsmodul (10) angibt, dass es fähig ist, den Erfassungsbefehl für Schnittstelleninformation(en) auszuführen.

5. Teilnehmeridentifikationsmodul (10) des Typs, der dafür vorgesehen ist, mit einem Mobiltelefon (20) zusammenzuarbeiten, **dadurch gekennzeichnet**, dass es umfasst:
- Mittel (161) zum Senden eines Erfassungsbefehls für wenigstens eine Schnittstelleninformation(en), die die oder wenigstens eine der Schnittstelle(n) (28 bis 211) des Endgeräts (20) betreffen, zum Endgerät (20);
- Mittel (162) zum Empfangen einer Antwort, die das Endgerät (20) im Anschluss and das Senden (30) des Erfassungsbefehls sendet, wobei die Antwort wenigstens eine Schnittstelleninformation enthält;
- Mittel (131) zur Anpassung seines Betriebs in Abhängigkeit vom Inhalt der Antwort.

6. Teilnehmeridentifikationsmodul (10) nach Anspruch 5, **dadurch gekennzeichnet**, das es Mittel (15) zum vorübergehenden Speichern der oder wenigstens einer Schnittstelleninformation umfasst.

7. Mobiltelefon (20) des Typs, der dafür vorgesehen ist, mit einem Teilnehmeridentifikationsmodul (10) zusammenzuarbeiten, **dadurch gekennzeichnet**, dass es umfasst :
- Mittel (211₁) zum Empfangen und (21a) zur Durchführung eines Erfassungsbefehls für wenigstens eine Schnittstelleninformation, die die oder wenigstens eine der Schnittstelle(n) (28 bis 211) des Endgeräts (20) betrifft, wobei ihm der Befehl durch das Teilnehmeridentifikationsmodul (10) gesendet wird, wobei die Durchführung gestattet eine Antwort zu erzeugen, die wenigstens eine Schnittstelleninformation enthält;
- Mittel (2112) zum Senden der Antwort zum Teilnehmeridentifikfationsmodul (10).

## Claims

1. A method of adapting the operation of a subscriber identity module (10) as a function of interface information concerning the or at least one of the interface(s) (28 to 211) of a mobile radiocommunications terminal (20) with which said subscriber identity module (10) co-operates, said method being **characterized in that** it comprises the following steps:
said subscriber identity module (10) transmits (30) an interface information acquisition command to said terminal (20);
said terminal (20) receives and executes (31) said interface information acquisition command so as to generate a reply containing interface information;
said terminal (20) transmits (32) said reply to said subscriber identity module (10); and
said subscriber identity module (10) receives (33) said reply and adapts its operation as a function of the contents of said reply.

2. A method according to claim 1, **characterized in that** said interface information belongs to the group comprising:
the type of display of said terminal (20);
the size of the screen (28) of said terminal (20);
the size in text terms of the screen (28) of said terminal (20);
the type of keypad (29) of said terminal (20);
the range of sound frequencies that said terminal (20) is capable of generating; and
the range of sound frequencies that said terminal (20) is capable of receiving.

3. A method according to claim 1 or 2, **characterized in that** said interface information acquisition command is a command additional to a set of commands in the protocol for dialog between said terminal (20) and said subscriber identity module (10).

4. A method according to any one of claims 1 to 3, **characterized in that**, during a prior step, said terminal (20) indicates to said subscriber identity module (10) whether or not it is capable of executing said interface information acquisition command.

5. A subscriber identity module (10) of the type designed to co-operate with a mobile radiocommunications terminal (20), said subscriber identity module being **characterized in that** it includes:
means (161) for transmitting an acquisition command to said terminal (20) to acquire interface information concerning the or at least one of the interface(s) (28 to 211) of said terminal (20);
means (162) for receiving a reply sent to it by said terminal (20) in response to transmission (30) of said acquisition command, said reply containing interface information; and
means (131) for adapting its operation as a function of the contents of said reply.

6. A subscriber identity module (10) according to claim 5, **characterized in that** it includes means (15) for temporarily storing said interface information.

7. A mobile radiocommunications terminal (20) of the type designed to co-operate with a subscriber identity module (10), said terminal being **characterized in that** it includes:
reception means (211₁) and execution means (21a) for receiving and executing an acquisition command to acquire interface information concerning the or at least one of the interface(s) (28 to 211) of said terminal (20), said command being sent to it by said subscriber identity module (10), said execution making it possible to generate a reply containing interface information; and
means (211₂) for transmitting said reply to said subscriber identity module (10).
